# EUROPÄISCHE PATENTSCHRIFT

(11) **EP 1 342 416 B1**
(45) Veröffentlichungstag und Bekanntmachung des Hinweises auf die Patenterteilung: **17.10.2007**
(21) Anmeldenummer: 02005459.9
(22) Anmeldetag: 09.03.2002
(51) Int. Cl.: A21D 2/38, A21D 2/36, A21D 13/02, A21D 10/00, A21D 8/04

(54) **Verfahren zur Herstellung und/oder Konservierung von Quellstücken aus Schrot, Körnern und Getreidekeimlingen**
Process for the preparation and/or the conservation of swollen pieces from bruised grains, whole grains or cereal germs
Procédé de préparation et/ou conservation de morceaux gonflés a base de gruau, grains ou germes de céréales

(43) Veröffentlichungstag der Anmeldung: 10.09.2003
(73) Patentinhaber: Ernst Böcker GmbH & Co. KG, 32427 Minden (DE)
(72) Erfinder: Stolz, Dr. Peter, 32457 Porta Westfalica (DE)
(74) Vertreter: Thiel, Christian

(56) Entgegenhaltungen:
- DE-A- 3 323 081
- DE-A- 3 810 322
- FR-A- 2 594 002
- FR-A- 2 641 946
- FR-A- 2 676 008
- US-A- 4 238 512

## Beschreibung

Die Erfindung betrifft ein Verfahren zur Herstellung und/oder zur Konservierung von Quellstücken aus Getreidekörnern, Schrot und Getreidekeimlingen. Ferner betrifft die Erfindung ein Quellstück/Getreidekeimlinge-SauerteigNorteig-Produkt für die Herstellung spezieller Backwaren.

Zunehmend werden heutzutage Brotsorten mit ganzen oder teilweise zerkleinerten Getreidekörnern und mit Getreidekeimlingen angeboten. Diese aus ernährungsphysiologischer Sicht besonders wertvollen Brotsorten werden bei Verbrauchern immer beliebter. Der Vorteil derartiger Brote liegt in ihrem höheren Gehalt an Mineral- und Ballaststoffen, Vitaminen, da alle Bestandteile des Korns / Keimlings in die Backware eingearbeitet werden. Dabei kommen alle Mehltypen und Getreidesorten für die Herstellung in Frage.

Um ganze Körner bzw. teilweise geschrotete Körner direkt in Teigen einzuarbeiten, bedarf es einer besonderen Vorbehandlung der Körner. Eine direkte Verwendung von ganzen unbehandelten Körnern als solche für die Herstellung von Backwaren ist nicht sinnvoll, da sie sich nach dem Backprozeß verhärten und nicht mehr zum Verzehr geeignet sind.

Es ist daher üblich, die Körner, bevor diese in den Brotteig eingearbeitet werden, in Wasser einzuweichen. Es gibt zwei herkömmliche Methoden zur Einweichung von Körnern, die von der Temperatur des Einweichwassers abhängen. Man unterscheidet zwischen "Brühstück" und "Quellstück".

Bei dem Verfahren "Brühstück" werden die Körner mit heißem Wasser bei ca. 70°C bis annähernd 100°C versetzt. Diese verbleiben in dem Wasser für einige Stunden, um aufzuquellen. In der Regel liegt die Einweichzeit zwischen sechs und vier Stunden bei 20°C bis 40°C. Je wärmer das Einweichwasser, desto kürzer wird die Einweichzeit.

Bei dem Verfahren "Quellstück" werden die Körner vorab mit kaltem Wasser bei 10°C bis 30°C versetzt. Die Körner werden dann für 12 Stunden bei 20°C oder für acht Stunden bei 40°C in dem Wasser eingeweicht und aufgequollen. Üblicherweise beträgt das Verhältnis zwischen Wasser und Körnern 1:1.

Das Wasser, das zum Einweichen bzw. Quellen der Körner oder Schrote verwendet wird, wird auch als Schüttwasser bezeichnet. Am Ende der Einweichzeit sollte das gesamte Schüttwasser von den Körnern vollständig aufgenommen worden sein. Anschließend können die verquollenen Körner oder Schrote für die Herstellung von Broten verwendet werden.

Insbesondere bei der Verarbeitung der verquollenen Körner in Roggen- oder Weizen-Brotteigen kommen weitere Verarbeitungsschritte, wie die Sauerteigführung oder die Vorteigführung, hinzu. In Ländern mit hohem Roggenverzehr dient die Verwendung von Roggensauerteig der Säuerung, der Geschmacks- und Aromasteigerung sowie zum Teil der Lockerung des Roggen- und Roggenmisch-Brotteiges. Bei der Herstellung von Weizenbroten besteht aufgrund der Weizenmehleigenschaften keine technologische Notwendigkeit, den Weizenbrotteig anzusäuern. Weizensauerteige werden aber zur Geschmacks- und Aromaverbesserung eingesetzt. Darüber hinaus erhöhen sie den Schimmelschutz und die Frischhaltung des Weizenbrotes. Zur Säuerung werden traditionell Weizensauerteige oder mild gesäuerte Weizenvorteige verwendet.

Sauerteig- und Vorteig-Fermentationen können spontan oder mit Hilfe von geeigneten Starterkulturen eingeleitet werden. Spontan eingeleitete Fermentationsprozesse jedoch unterliegen einem hohen mikrobiologischen Risiko, wobei es in Folge von Fehlfermentation auch zu minderwertigen Produkten kommen kann.

Für Sauerteig geeignete Starterkulturen können durch technologische Reinkulturverfahren unter sterilen Bedingungen in Fermentern gewonnen werden. Diese Reinkulturen sind zwar einfach und reproduzierbar zu kultivieren; sie sind aber häufig nicht mehr ausreichend an die Bedingungen im Sauerteig angepaßt, so daß insbesondere in der Praxis unter unsterilen Bedingungen Qualitätsschwankungen auftreten können.

Besonders gut an die Milieubedingungen der Sauerteigfermentation angepaßt sind durch "natürliche Reinzucht" mittels wiederholter Kultivierungs- und Rekultivierungszyklen im Lebensmittel hergestellte Kulturen.

Die Säuerung bei Sauerteigen basiert auf dem Stoffwechsel von Milchsäurebakterien, insbesondere Laktobazillen, die aufgrund ihrer Stoffwechseleigenschaften als homo- oder heterofermentative Laktobazillen klassifiziert werden.

Homofermentative Laktobazillen verstoffwechseln Glukose fast ausschließlich zu Milchsäure. Heterofermentative Laktobazillen dagegen vergären Glukose bzw. Maltose aufgrund einer anderen Enzymausstattung zu Milchsäure, CO₂ und Ethanol oder Essigsäure. Mit heterofermentativen Laktobazillen hergestellte Sauerteige sind den mit homofermentativen Laktobazillen hergestellten Sauerteigen in sensorischer Hinsicht in der Regel überlegen.

Weizenvorteige werden meistens mit Backhefen beimpft. Backhefen sind jedoch häufig mit Milchsäurebakterien verunreinigt, wodurch es zu einer unkontrollierten Säurebildung bei Hefevorteig-Führungen kommen kann. Die in Backhefen gefundenen Milchsäurebakterien sind in der Regel nicht oder nur mangelhaft an das Habitat Getreide bzw. Teig angepaßt. Ferner unterliegt deren Keimzahl erheblichen Schwankungen, weshalb eine reproduzierbare Vorteigqualität oft nicht gewährleistet ist.

Sauerteig- und Vorteig-Fermentationen sind nicht auf die bloße Säuerung und Gasbildung im Teig beschränkt. Auch Quellungsvorgänge und die Bildung von Aromapräkursoren aus dem Eiweiß-, Fett- und Kohlenhydratstoffwechsel der beteiligten Mikroorganismen sowie Quellungsvorgänge sind von wertbestimmender Bedeutung für die Qualität von Backwaren.

Der daraus resultierende hohe Zeit- und Arbeitsaufwand für die Herstellung von Körner- und Schrotbroten sowie Broten mit Keimlingen, stellen für kleinere Bäckereien und Privathaushalte ein Problem dar, da einerseits aufgrund des oft nicht vorhandenen Know-Hows oder aus Gründen des fehlenden Equipments arbeits- und zeitaufwendige Herstellungsverfahren nicht durchgeführt werden können.

Aus dem Stand der Technik sind zwei Verfahren gemäß EP 0 821 884 A1 und EP 0 852 907 bekannt, bei dem die Körner mit Wasser unter Zugabe von Säuerungsmitteln oder Sauerteig aufgequollen werden. Bei diesem Verfahren wird jedoch eine nachträgliche Hitzebehandlung des Endproduktes durchgeführt. "Nachträglich" wird hier verstanden als der Zeitpunkt nach dem Aufquellen. Die heiße Nachbehandlung wird durchgeführt, um das Produkt lagerstabil zu machen.

Ein Verfahren zur Herstellung von Backwaren, wobei gekeimte Getreidekörner oder ganze Körner verwandt werden, ist aus FR-A-2 594 002 beschrieben. Jedoch werden die Körner hierbei nicht vorher verquollen.

Aus dem Stand der Technik ist des weiteren die Schrift US-A-4,238,512 bekannt. Darin wird ein Verfahren zur Herstellung von Sauerteig mit langer Haltbarkeit für die Zubereitung für Brot und Teigen beschrieben, indem Roggenschrot mit Wasser unter Zugabe von Säuerungsmittel und heterofermentativen Bakterien, wie Milchsäurebakterien und Essigsäurebakterien zugesetzt werden. Der Haltbarkeitseffekt wird durch Verwendung der Bakterien erzielt.

Auch ist ein Verfahren gemäß FR-A-2 676 008 zur Herstellung von Brotteigen bekannt, wobei die eingesetzten Körner auch vorher mittels einer speziellen Behandlung mit Wasser von den Getreideschalen getrennt werden. Die Erfindung betrifft jedoch nicht die Herstellung von Quellstücken. Hierbei werden alle Backzutaten gleichzeitig vermengt und direkt hergestellt.

Das Verfahren gemäß DE 38 10 322 A1 beschreibt ebenfalls eine einstufige Brot-Herstellung auf natürlicher Sauerteigbasis durch den Zusatz von Wasser (70 bis 80 I).

Aus dem Stand der Technik ist ebenfalls ein Verfahren (FR-A-2 641 946) beschrieben, mit dem ein Diätbrot hergestellt werden kann, wobei die Körner gemahlen werden, damit die Masse eine krustenartige Struktur bekommt. Zwar wird hier Sauerteig verwandt, jedoch ist der Zusatz von Wasser ebenfalls erforderlich.

Auf frischem und gut gelagertem Ährengetreide dominieren als natürliche äußere Flora gramnegative Bakterien, wie Enterobakterien, Pseudomonas und Xanthomonas Spezies, aber auch Schimmelpilze, insbesondere der Gattungen Fusarium und Alternaria, sind in geringer Zahl vertreten, die sogar den inneren Bereich des Getreidekorns zwischen Exocarp und Pericarp besiedeln können. Bei längerer Lagerung kann sich das Keimspektrum verschieben und sich die Zusammensetzung der Pilzflora durch Begünstigung austrocknungsrestistenterer Lagerpilze verändern.

Um eine mikrobielle Vermehrung während der Lagerung von Getreide zu vermeiden, werden die Getreidekörner im Zustand der "Totreife" geschnitten und zum Nachtrocknen stehen gelassen und dann gelagert. Der Wassergehalt der Körner wird dabei von ca. 20 % - 24 % bis auf ca. 14 % - 16 % reduziert. Bei den Getreidekeimlingen wird aber der Keimvorgang regelmäßig vorzeitig gestoppt, so daß das antimikrobielle Potential sich nicht vollständig entfalten kann.

Durch das Einweichen der Körner in Wasser werden die auf oder in dem Korn befindlichen Mikroorganismen oder Pilze reaktiviert. Deren Vermehrung wird aufgrund der Einweichtemperatur, die sich im Bereich der Vermehrungstemperatur befindet, sowohl bei den herkömmlichen Verquellungsverfahren als auch bei den Verfahren gemäß EP 0 821 884 A1 und EP 0 852 907, begünstigt. Der Versuch, die mikrobielle Vermehrung durch Zugabe von Säuerungsmittel wie Milchsäure, Essigsäure, oder von herkömmlichem Sauerteig zu verhindern, hat nur bei einer kurzen Lagerung Erfolg. Bei einer längeren Lagerung der verquollenen Körner muß das Endprodukt pasteurisiert oder sterilisiert werden, um die Keimfreiheit des Produktes zu garantieren.

DE 33 23 081 A1 beschreibt ein Verfahren zur Herstellung und Konservierung von Sauerteig, also Roggenschrot, wobei die Verwendung von Restbrot und Milchsäurebakterien zur Fermentierung herangezogen werden.

Durch die nachträgliche Hitzebehandlung der Körner und Schrote wird die Qualität der Backware negativ beeinflußt. Die in den verquollenen Getreidekörnern enthaltenen Vitamine, Mineralstoffe und Ballaststoffe und die in Getreidekeimlingen aktivierten Enzyme werden thermisch zerstört. Der ernährungsphysiologische Wert der damit hergestellten Backware wird dadurch gemindert. Andererseits wird die im Korn und im Sauerteig vorhandene Stärke vorverkleistert, welche wiederum im Backprozeß noch mal erhitzt wird, was zu einer "gummiartigen" Texturveränderung der Backware führen kann. Die Qualitätseinbuße der Backware ist somit erheblich.

Der Erfindung liegt daher die Aufgabe zugrunde, ein Verfahren vorzuschlagen, mit dem Getreidekörner/Getreideschrot/Getreidekeimlinge schonend konserviert und/oder aufgequollen werden können, ohne daß eine nachträgliche Hitzebehandlung des Endproduktes notwendig wird. Darüber hinaus soll ein Quellstück/Getreidekeimlinge-Sauerteig/Vorteig-Produkt bereitgestellt werden, mit dem spezielle sauerteigtypische Backwaren mit ganzen Körnern hergestellt werden können, ohne daß betriebseigener Sauerteig oder Quellstücke hergestellt werden müssen.

Zur Lösung dieser Aufgabe schlägt die Erfindung, ausgehend von einem Verfahren der eingangs genannten Art vor, daß Getreidekörner, Schrot oder Getreidekeimlinge mit Sauerteig/Vorteig versetzt und dann verquollen und konserviert werden, wobei das entstandene Endprodukt ohne Hitzebehandlung lagerfähig ist.

Ein weiterer Vorteil dieses Verfahren ist, dass die im Sauerteig verquollenen Körner/Schrote/Keimlinge gegenüber das im Wasser vorverquollenen Getreide, das nachträglich mit Sauerteig versetzt wird, die im Sauerteig gebildeten Aromapräkursoren besser aufnehmen und das Säure- und Aromenpotential dieses Verfahrens besser genutzt wird, um spezielle aromareiche und vor Verderb geschützte verquollene Getreidekörner, Schrote und Keimlinge herzustellen, ohne daß es einer Hitzebehandlung des Produktes bedarf. Durch den Einsatz von reinem Sauerteig als Quellmedium, Konservierungsmedium und/oder Aromamedium werden die Körner vollständig von einer Sauerteigmatrix umhüllt und damit langsam aufgequollen. Dabei werden insbesondere die Inhaltsstoffe des Sauerteigs / Vorteigs, vor allem Sauerteig-Aromen, von den Körnern aufgenommen.

Überraschend wurde festgestellt, daß die derart behandelten Getreidekörner und Getreidekeimlingen ohne eine nachträgliche Hitzebehandlung außerordentlich lange haltbar sind. Die Mindesthaltbarkeit beträgt ohne weiteres 6 Monate und länger. Eine zusätzliche Pasteurisierung oder Sterilisierung ist nicht notwendig, so daß nicht nur Zeit, sondern Energie bzw. Geld gespart werden kann. Das Endprodukt kann nach dem Aufquellvorgang sofort abgepackt, verkauft oder bis zum Verkauf gelagert werden. Dabei sind die entstandenen oder darin enthaltenen wertvollen Vitaminen, Mineralstoffe, Ballaststoffe, Aromapräkursoren, etc. im Endprodukt erhalten geblieben.

Darüber hinaus sind die im Sauerteig vorhandenen Milchsäurebakterien und Hefen im erfindungsgemäßen Endprodukt lebensfähig, so daß sie bei der Teigherstellung genutzt werden können. Bei dem aus dem Stand der Technik bekannten Endprodukt mit Sauerteig als Säuerungsmittel werden die für den Sauerteig wichtigen Milchsäurebakterien abgetötet.

Bei dem erfindungsgemäßen Verfahren werden auf dem Getreide vorhandene Keime durch die im Sauerteig vorhandener Mikroflora verdrängt und durch Absenkung des pH-Wertes und der von heterofermentativen Milchsäurebakterien gebildeten Essigsäure daran gehindert, sich zu vermehren. Des weiteren werden die Getreidekörner ideal aufgequollen, d. h. die Körner sind zwar aufgequollen, behalten jedoch einen gewissen Biß. Bei zu langer Quellung oder zu hoher Wasserverfügbarkeit werden die Körner zu weich, verlieren ihren Biss. Zu weiche Körner können auch beim Knetprozess zerstört werden.

Vorzugsweise wird der Sauerteig/Vorteig als Quellmedium, als Konservierungsmedium und/oder als Aromamedium eingesetzt, im weiteren Text als "Quellmedium". Bei dem erfindungsgemäßen Verfahren wird die technologische Wirkung des Sauerteigs/Vorteig nicht eliminiert, sondern für die Herstellung der Backware genutzt.

Bei dem erfindungsgemäßen Verfahren wird zunächst das Quellmedium mit aus Reinzucht gewonnenen Starterkulturen hergestellt. Dabei wird eine Getreide/Wassersuspension mit einer Starterkultur beimpft und bei einer angemessenen Temperatur und Stehzeit fermentiert. Als Quellmedium können Sauerteige in Frage kommen, die mit Hilfe von heterofermentativen Laktobazillen und Fructose bzw. Sauerstoff als Elektronenakzeptor vermehrt Essigsäure bilden. Ferner können auch Salzsauerteige als Quellmedium verwendet werden. Die Stehzeiten und Fermentationstemperaturen der Sauerteige sind abhängig von den verwendeten Starterkulturen und vom gewünschten Säuregrad des Quellmediums. Dabei liegen die Stehzeiten zwischen 16 und 72 Stunden und die Fermentationstemperaturen bewegen sich in einem Bereich von 20 - 45 °C.

Als Getreidemahlprodukte für die Sauerteige/Vorteige kommen handelsübliche Roggen- und Weizenmehle, aber auch sehr aschereiche Mahlfraktionen in Verbindung mit der empfohlenen Starterkultur zur Anwendung. Bevorzugt wird bei Weizenmehlen ein Aschegehalt von 550 bis 1050 mg pro 100 g, besonders bevorzugt von 500 bis 630 mg pro 100 g. Bei Roggenmehlen wird bevorzugt ein Aschegehalt von 997 bis 1800 mg pro 100 g, besonders bevorzugt 1100 bis 1400 mg pro 100 g verwendet. Es können auch Mahlgüter aus Weizenkeimmehlen, Gerste, Hafer und Reis herangezogen werden.

Bevorzugt handelt es sich bei den Sauerteig-Starterkulturen um Lactobacillus sanfranciscensis Typ I DMSZ 10613, Typ II DSMZ 14842, nachfolgend als Starterkultur A bezeichnet.

In einem weiteren bevorzugten erfindungsgemäßen Verfahren besteht der Vorteig-Starter aus Saccharomyces species DSMZ 14265 und einer Laktobazillenflora mit Lb. pontis DSMZ 14272, Lb. pontis III DSMZ 14273, Lb. pontis IV DSMZ 14274, Lb. pontis I DSMZ 14269 und Lb. crispatus DSMZ 14271 bzw. Lb. plantarum DSMZ 14268, Lb. sanfranciscensis DSMZ 14270, weiterhin als Starterkultur B bezeichnet.

In einem weiteren erfindungsgemäßen Verfahren besteht die Sauerteigkultur aus adaptierten bakteriellen Mikrofloren, welche in der EP 1 110 458 A1 beschrieben sind, nachfolgend als Starterkultur C bezeichnet. Insbesondere werden die Stämme der Lb. amylovorus DSMZ 13142, Lb. Spezies mit der DSMZ 13184 und 13143, Lb. pontis DSMZ 13144 und Lb. reuterie DSMZ 13185 herangezogen.

Mit diesen Starterkulturen als Mischkultur sind Quellmedien mit "aufquellenden", konservierenden, aromagebenden Eigenschaften herstellbar. "Aufquellende Eigenschaft" ist das Vermögen, Getreidekörner darin aufquellen zu lassen.

Zur Haltbarmachung von Getreidekeimlingen werden die Körner vorab zur Keimung gebracht und dann mit dem Sauerteig/Vorteig versetzt, welches als Konservierungsmedium und aromagebendes Medium dient. Die "aufquellende" Eigenschaft spielt hierbei nur eine untergeordnete Rolle. Ausschlaggebend ist die konservierende Eigenschaft. Bekanntlich sind Getreidekeimlinge aus mikrobiologischer Sicht gefährdeter als Getreidekörner, da während des Keimprozesses diese mit Wasser versetzt werden. Die Keimung findet in der Regel erst dann statt, wenn die Körner einen bestimmten Wassergehalt aufweisen. Auf dem Getreide vorhandene Mikroorganismen können sich somit vermehren.

Erfindungsgemäß können diese reaktivierten Mikroorganismen gehemmt oder sogar eliminiert werden.

Bei dem erfindungsgemäßen Verfahren werden die Körner, Schrote mit dem Sauerteig/Vorteig im Verhältnis von 30 bis 70 % Getreide zu 70 bis 30 % SauerteigNorteig vermischt und bei einem Quelltemperatur von 10°C bis 50°C, bevorzugt bei 20 bis 35°C, verquollen. Die Quellzeit hängt von Art und Menge des Rohstoffes ab. Vorzugsweise liegt sie bei 3 bis 90 Stunden, besonders bevorzugt bei 12 bis 72 Stunden.

Die Menge des Quellmediums sowie die Menge der Rohstoffe wird so bemessen, daß nach der Quellzeit keine überschüssige flüssige Phase mehr vorhanden ist. Dies bedeutet, daß die Getreidekörner das wässrige Medium des Sauerteigs/Vorteigs fast vollständig aufgenommen haben.

Das Produkt kann unmittelbar nach Abschluß des Quellvorgangs ohne weitere Behandlung, insbesondere Erhitzung, portioniert und abgepackt werden. Eine Pasteurisierung oder Sterilisierung ist nicht erforderlich.

Bevorzugt weist das Endprodukt einen Säuregrad von unter 100, besonders bevorzugt unter 30, auf. Dieser Säuregrad bewirkt eine milde Säuerung der aufgequollenen Körner, so daß mehr Körner in die Backware eingearbeitet werden können, ohne daß die Backware selbst zu "sauer" schmeckt.

Das entstandene Endprodukt ist ein Quellstück/Getreidekeimling-Sauerteig/Vorteig-Produkt, welches ohne Hitzebehandlung in geeignete Verpackung abgefüllt wird. Idealerweise sind Verpackungen aus Folien oder Kunststoff, die als Eimer oder Tüten ausgebildet sind. Andere Materialien sind ebenso denkbar.

Nachstehend wird die Erfindung anhand von Ausführungsbeispielen näher erläutert:

### Herstellung des Quellmediums

### 1. Roggenvollkornsauerteig:

| | |
|---|---|
| Roggenvollkornmehl | 200 g |
| Wasser | 200 g |
| Starterkultur A | 20 g |
| Teigtemperatur | 24 bis 32°C, |
| Stehzeit | 16 bis 48 Stunden |

### 2. Weizensauerteig/Weizenvorteig:

| | |
|---|---|
| Weizenmehl Typ 550 | 200 g |
| Wasser | 200 g |
| Starterkultur B | 200 g |
| Teigtemperatur | 20 bis 26°C, |
| Stehzeit | 16 bis 48 Stunden |

### 3. Roggensauerteig:

| | |
|---|---|
| Roggenmehl Typ 1150 | 200 g |
| Wasser | 200 g |
| Starterkultur C | 20 g |
| Teigtemperatur | 35 bis 46°C |
| Stehzeit | 2 bis 6 Tage |

## Patentansprüche

1. Verfahren zur Herstellung und/oder Konservierung von Quellstücken aus Getreidekörnern, Schrot und Getreidekeimlingen, die für die Herstellung von Backwaren verwendet werden, **dadurch gekennzeichnet, daß** Getreidekörner, Schrot oder Getreidekeimlinge mit Sauerteig und/oder Vorteig versetzt und darin aufgequollen und konserviert werden, wobei kein freies Wasser, insbesondere kein Schüttwasser, zugesetzt wird und das entstandene Endprodukt ohne Hitzebehandlung lagerfähig ist.

2. Verfahren nach Anspruch 1, **dadurch gekennzeichnet, daß** der Sauerteig/Vorteig als alleiniges Quellmedium, als Konservierungsmedium und/oder als Aromamedium dient.

3. Verfahren nach Anspruch 1, **dadurch gekennzeichnet, daß** der Sauerteig/Vorteig mit aus Reinzucht gewonnenen Starterkulturen hergestellt ist.

4. Verfahren nach den Ansprüchen 1 bis 3 **dadurch gekennzeichnet, daß** es sich bei den Sauerteig-Starterkulturen um Lactobacillus sanfranciscensis Typ I DMSZ 10613 und Typ II DSMZ 14842 handelt.

5. Verfahren nach Ansprüchen 1 bis 3, **dadurch gekennzeichnet, daß** der Vorteig-Starter aus Saccharomyces species DSMZ 14265 und einer Laktobazillenflora mit Lb. pontis DSMZ 14272, Lb. pontis III DSMZ 14273, Lb. pontis IV DSMZ 14274, Lb. pontis I DSMZ 14269 und Lb. crispatus DSMZ 14271 bzw. Lb. plantarum DSMZ 14268, Lb. sanfranciscensis DSMZ 14270 besteht.

6. Verfahren nach Ansprüchen 1 bis 3, **dadurch gekennzeichnet, daß** es sich bei den Sauerteig-Starterkulturen um Lb. amylovorus DSMZ 13142, Lb. Spezies mit der DSMZ 13184 und 13143, Lb. pontis DSMZ 13144 und Lb. reuterie DSMZ 13185 handelt.

7. Verfahren nach den Ansprüchen 1 bis 6, **dadurch gekennzeichnet, daß** die Getreidekörner vor der Zugabe des Konservierungsmediums einem Keimprozeß ausgesetzt werden.

8. Verfahren nach einem der vorstehenden Ansprüche, **dadurch gekennzeichnet, daß** das Verhältnis Sauerteig/Vorteig zu Getreidekörner/Schrot/Getreidekeimling 30:70 bis 70:30 beträgt.

9. Verfahren nach Anspruch 1, **dadurch gekennzeichnet, daß** die Quelltemperatur 10°C bis 50°C, besonders bevorzugt 20°C bis 35°C, beträgt.

10. Verfahren nach einem der vorstehenden Ansprüche, **dadurch gekennzeichnet, daß** die Quellzeit 3 bis 90 Stunden, bevorzugt 12 bis 72 Stunden, beträgt.

11. Verfahren nach Anspruch 1, **dadurch gekennzeichnet, daß** das Endprodukt einen Säuregrad von unter 100, vorzugsweise unter 30, aufweist.

12. Verfahren nach Anspruch 1, **dadurch gekennzeichnet, daß** das Produkt ein Quellstück/Getreidekeimling-Sauerteig/Vorteig-Produkt ist, welches nicht pasteurisiert oder sterilisiert ist.

13. Verfahren nach Anspruch 1, **dadurch gekennzeichnet, daß** das Produkt ohne weitere Erhitzung unter nicht sterilen Bedingungen portioniert und in geeignete Verpackungen, bevorzugt Folientüten, Kunststoffbehältnisse, abgepackt wird.

14. Quellstück/Getreidekeimlinge-SauerteigNorteig-Produkt nach Ansprüchen 1 bis 13.

15. Verwendung des QueIIstück/Getreidekeimlinge-SauerteigNorteig-Produkts gemäß Anspruch 14 zur Herstellung von Backwaren, insbesondere von Spezialbroten mit ganzen verquollenen Körnern, Schrot und/oder Getreidekeimlingen.

## Claims

1. A process for the preparation and/or conservation of swollen cereal grains, groats and cereal germs, which are used for the production of bakery products, **characterised in that** cereal grains, groat or cereal germs are mixed with sour dough and/or predough and are swollen and conserved therein, wherein no free water, particularly no poured water, is added and the final product produced is storable without heat treatment.

2. A process as claimed in claim 1, **characterised in that** sour dough/predough serves as the only swelling medium, as a conservation medium and/or as a flavouring medium.

3. A process as claimed in claim 1, **characterised in that** the sour dough/predough is produced with starter cultures obtained from pure breeding.

4. A process as claimed in claim 1 to 3, **characterised in that** the sour dough starter cultures are Lactobacillus sanfranciscensis Type I DSMZ 10613 and type II DSMZ 14842.

5. A process as claimed in claims 1 to 3, **characterised in that** the predough starter is Saccharomyces species DSMZ 14265 and a Lactobacillus flora with Lb. pontis DSMZ 14272, Lb. pontis III DSMZ 14273, Lb. pontis IV DSMZ 14274, Lb. pontis I DSMZ 14269 and Lb. crispatus DSMZ 14271 or Lb. plantarum DSMZ 14268, Lb, sanfranciscensis DSMZ 14270.

6. A process as claimed in claims 1 to 3, **characterised in that** the sour dough starter cultures are Lb. amylovorus DSMZ 13142, Lb. Species with the DSMZ 13184 and 13143, LB. pontis DSMZ 13144 and Lb. reuterie DSMZ 13185.

7. A process as claimed in claims 1 to 6, **characterised in that** the cereal grains are subjected to a germination process before the addition of the conservation medium.

8. A process as claimed in one of the preceding claims, **characterised in that** the ratio of sour dough/predough to cereal grains/groats/cereal germ is 30:70 to 70:30.

9. A process as claimed in claim 1, **characterised in that** the swelling temperature is 10°C to 50°C, particularly preferably 20°C to 35°C.

10. A process as claimed in one of the preceding claims, **characterised in that** the swelling time is thirty to ninety hours, preferably, twelve to seventy two hours.

11. A process as claimed in claim 1, **characterised in that** the final product has a degree of acidity of less than 100, preferably less than 30.

12. A process as claimed in claim 1, **characterised in that** the product is a swollen grain/cereal germ-sour dough/predough product, which is not pasteurised or sterilised.

13. A process as claimed in claim 1, **characterised in that** the product is divided into portions without further heating under non-sterile conditions and is packed in suitable packages, preferably foil bags or plastic containers.

14. A swollen grain/cereal germ-sour dough/predough product in accordance with claims 1 to 13.

15. The use of the swollen grain/cereal germ-sour dough/predough product as claimed in claim 14 for producing bakery products, particularly special breads with fully swollen grains, groats and/or cereal germs.

## Revendications

1. Procédé de fabrication et/ou de conservation de fragments gonflants issus de grains de céréales, de gruaux et de germes de céréales, qui sont utilisés pour la fabrication de produits de boulangerie, **caractérisé en ce que** les grains de céréales, gruaux ou germes de céréales sont mélangés à un levain ou une pâte à travail indirect et y sont gonflés et mis en conserve, aucune eau libre, en particulier aucune eau protectrice n'étant ajoutée et le produit final obtenu se conservant sans traitement thermique.

2. Procédé selon la revendication 1, **caractérisé en ce que** le levain/pâte à travail indirect sert d'unique milieu de gonflement, de milieu de conservation et/ou de milieu d'aromatisation.

3. Procédé selon la revendication 1, **caractérisé en ce que** le levain/pâte à travail indirect est fabriqué avec des cultures starters obtenues par culture pure.

4. Procédé selon les revendications 1 à 3, **caractérisé en ce que** les cultures starters de levain sont lactobacillus sanfranciscensis type I DSMZ 10613 et type II DSMZ 14842.

5. Procédé selon les revendications 1 à 3, **caractérisé en ce que** le starter de pâte à travail indirect est composé de l'espèce Saccharomyces DSMZ 14265 et d'une flore de lactobacilles contenant Lb. pontis DSMZ 14272, Lb. pontis III DSMZ 14273, Lb. pontis IV DSMZ 14274, Lb. pontis I DSMZ 14269 et Lb. crispatus DSMZ 14271 resp. Lb. plantanum DSMZ 14268, Lb. sanfranciscensis DSMZ 14270.

6. Procédé selon les revendications 1 à 3, **caractérisé en ce que** les cultures starters de levain sont Lb. amylovorus DSMZ 13142, une espèce Lb. avec DSMZ 13184 et 13143, Lb. pontis DSMZ 13144 et Lb. reuterie DSMZ 13185.

7. Procédé selon les revendications 1 à 6, **caractérisé en ce que** les grains de céréales sont exposés à un processus de germination avant l'ajout du milieu de conservation.

8. Procédé selon l'une des revendications précédentes, **caractérisé en ce que** le rapport entre le levain/la pâte à travail indirect et les grains de céréales/gruaux/germes de céréales vaut de 30:70 à 70:30.

9. Procédé selon la revendication 1, **caractérisé en ce que** la température de gonflement est de 10°C à 50°C, préférentiellement de 20°C à 35°C.

10. Procédé selon l'une des revendications précédentes, **caractérisé en ce que** le temps de gonflement est de 3 à 90 heures, préférentiellement de 12 à 72 heures.

11. Procédé selon la revendication 1, **caractérisé en ce que** le produit final présente un degré d'acidité inférieur à 100, de préférence inférieur à 30.

12. Procédé selon la revendication 1, **caractérisé en ce que** le produit est un produit fragments gonflants/germes de céréales-levain/pâte à travail direct qui n'est ni pasteurisé, ni stérilisé.

13. Procédé selon la revendication 1, **caractérisé en ce que** le produit est découpé en portions, sans autre chauffage, dans des conditions non stériles et emballé dans des emballages appropriés, de préférence des sachets en feuille, des récipients en matière plastique.

14. Produit fragments gonflants/germes de céréales-levain/pâte à travail direct selon les revendications 1 à 13.

15. Utilisation du produit fragments gonflants/germes de céréales-levain/pâte à travail direct, selon la revendication 14, pour fabriquer des produits de boulangerie, en particulier des pains spéciaux contenant des grains entiers gonflés, des gruaux et/ou des germes de céréales.
